# EUROPEAN PATENT SPECIFICATION

(11) **EP 4 292 774 B1**
(45) Date of publication and mention of the grant of the patent: **08.05.2024**
(21) Application number: 22203981.0
(22) Date of filing: 27.10.2022
(51) Int. Cl.: B25J 9/16, G05B 19/418, B23K 26/08

(54) **DIGITAL TWIN-BASED INTELLIGENT MANUFACTURING SYSTEM FOR MANUFACTURING BIONIC FUNCTIONAL SURFACES WITH INTEGRATED SYNCHRONIZATION CONTROLLER**
INTELLIGENTES HERSTELLUNGSSYSTEM BASIEREND AUF DIGITALEM ZWILLING ZUR HERSTELLUNG BIONISCHER FUNKTIONSOBERFLÄCHEN MIT INTEGRIERTER SYNCHRONISATIONSSTEUERUNG
SYSTÈME DE FABRICATION INTELLIGENT POUR FABRIQUER DES SURFACES FONCTIONNELLES BIONIQUES À BASE DE JUMEAU NUMÉRIQUE AVEC UN CONTRÔLEUR DE SYNCHRONISATION INTÉGRÉ

(30) Priority: 16.06.2022 CN 202210679634
(43) Date of publication of application: 20.12.2023
(73) Proprietor: Jilin University, Changchun, Jilin Province 130012 (CN)
(72) Inventor: ZHANG, Zhihui, Changchun City, 130012 (CN); JIANG, Chaorui, Changchun City, 130012 (CN); ZHANG, Baoyu, Changchun City, 130012 (CN); LIU, Ruijia, Changchun City, 130012 (CN); YU, Zhenglei, Changchun City, 130012 (CN); PENG, Jun, Changchun City, 130012 (CN); ZHENG, Shaopeng, Changchun City, 130012 (CN)
(74) Representative: Chung, Hoi Kan

(56) References cited:
- CN-A- 111 268 160
- WANG BAICUN ET AL: "Intelligent welding system technologies: State-of-the-art review and perspectives", JOURNAL OF MANUFACTURING SYSTEMS., vol. 56, 1 July 2020 (2020-07-01), pages 373-391, XP055901057, US ISSN: 0278-6125, DOI: 10.1016/j.jmsy.2020.06.020

## Description

### BACKGROUND OF THE INVENTION

### Field of the Invention

The present invention relates to the technical field of advanced manufacturing with cross-integration of machinery, materials, physics, computers, control, etc., in particular to an automated, intelligent, precise and multifunctional manufacturing device specially using laser means for engineering bionics.

### Description of Related Art

Bionics is a science of imitating biological principles to build technical systems, or making artificial technical systems have or resemble biological characteristics. The bionic functional surface is an artificial surface that has similar excellent biological functions and is designed and prepared by imitating typical characteristic elements of an organism surface. A large number of studies have shown that the design and manufacture of reasonable bionic functional surfaces can achieve various functional properties such as viscosity reduction, resistance reduction, wear resistance and fatigue resistance. In recent years, with the continuous successful application of bionic technology in the field of engineering, the research on process methods and equipment for the manufacture of bionic functional surfaces has become a hot topic at home and abroad.

The existing methods for manufacturing bionic functional surfaces involve mechanical processing, heat treatment, chemical etching, laser processing technology, etc. Among them, laser technology has advantages that cannot be replaced by other processing means due to its advantages such as good processing quality and green environmental protection. In addition, the rapid cooling and rapid heating effect of laser processing can improve the organizational structure of a bionic unit body, so as to achieve the purpose of improving the mechanical and mechanics properties of a material surface. By adjusting laser processing parameters, laser quenching, laser surface fusion, laser surface alloying, laser surface cladding, laser shock hardening, vapor deposition, etc. can be performed, and laser processing technology is suitable for combining with robotic technology, which can not only improve the intelligence and automation level of the entire processing equipment, but also significantly improve the flexibility and production efficiency of the system.

Many advantages of laser technology allow laser processing equipment to be directly used in the manufacture of bionic functional surfaces. However, low processing quality and efficiency have become the bottleneck restricting the research of bionic functional surfaces and the transformation of some bionic achievements. At present, the laser processing equipment that can be used for bionic manufacturing at home and abroad mainly has the following shortcomings:
1. It is difficult to acquire suitable processing parameters, which seriously restricts the improvement of processing efficiency. The bionic realization of the specific shape, structural parameters, etc. of the bionic surface needs to go through many preliminary tests. It is necessary to optimize suitable laser processing parameters on a test piece before applying same on workpieces to be processed, which makes the workload before processing large, prolongs the processing cycle, and restricts the improvement of processing efficiency. Therefore, there is still a lack of a set of database system dedicated to the selection of laser bionic manufacturing process parameters at home and abroad, which can automatically acquire accurate information of laser processing parameters and process data to realize bionic characteristics of surfaces of parts to be processed.
2. In terms of bionic information input, parameters such as the organization, morphology, scale and mechanical characteristics of a bionic unit body in an area to be processed cannot be directly input, but after the laser processing parameters are optimized by means of experiments, the staff will continue to adjust the equipment according to experience, and the optimized laser processing parameters are input, so that a formal processing operation can be carried out. There is still a lack of a human-computer interaction interface system at home and abroad that directly interacts with a bionic process parameter database system and directly inputs bionic information.
3. The degree of automation is low. For the laser processing equipment currently used in the manufacture of bionic functional surfaces, the generation of a processing path is mostly performed by the staff by means of simple online programming according to pre-estimated bionic parameter information, most of the generation of a processing scheme depends on the experience of the staff, and the process parameters for the preparation of bionic surfaces cannot be acquired automatically, which all have become the bottleneck restricting the automation degree of the whole preparation process and the improvement of processing accuracy.
4. The processing range is small. Precise and flexible small-scale laser preparation devices are only suitable for the bionic processing of small test pieces and parts, while large-scale and high-power lasers cannot meet the requirements for surface quality and precision of bionic processing. Therefore, bionic manufacturing of large part surfaces is limited.

Laser processing robots with a relatively high degree of automation currently used in the field of mechanical engineering, such as laser cutting and laser welding robots used in automobile body processing workshops, have a high degree of automation and can operate completely without human intervention. However, the design of the entire system is only customized for single and specialized production, and it is difficult to apply to bionic surface manufacturing that requires high technology, surface and processing parameters. After years of research, the inventor's research group has accumulated a large amount of data and experience, but lacks specialized equipment technology implementation.

WANG, BUICAN et al., Intelligent Welding System Technologies: State-of-the-Art Review and Perspectives, Journal of Manufacturing Systems, vol. 56, 1 July 2020, pages 373-391, ISSN: 0278-6125, examines fundamental components and techniques necessary to make welding systems intelligent, including sensing and signal processing, feature extraction and selection, modeling, decision-making, and learning. CN111268160 discloses a preparation device and a preparation method of a bionic layer, and belongs to the technical field of aircraft manufacturing.

### SUMMARY OF THE INVENTION

In view of the deficiencies of the existing technology, the present invention provides a digital twin-based intelligent manufacturing system suitable for bionic manufacturing of surfaces of various test pieces and parts, so as to realize the laser manufacturing of bionic characteristics such as the bionic shape, structure and material of metal and non-metal surfaces. The invention is defined by the appended claims.

A digital twin-based intelligent manufacturing system, composed of a human-computer interaction system, a programming control system, a twin virtual system and a processing execution system, where
the human-computer interaction system includes a 3D model editor module and a bionic processing unit constructor module; a processing scheme generator configured to receive parameters of parts to be processed from the 3D model editor module and bionic information parameters of the bionic processing unit constructor module;
the bionic information parameters include the selection of a bionic unit processing method, the setting of workpiece matrix material parameters, unit body characteristic parameters, the construction and calibration of processing position and area, etc.;
the programming control system includes a high-performance computer, a laser controller, a robot motion controller and an auxiliary device controller, with the laser controller, the robot motion controller and the auxiliary device controller being directly connected to the high-performance computer via a serial port;
the high-performance computer being integrated with a bionic process parameter database, the processing scheme generator and an integrated synchronization controller, with the bionic process parameter database and the processing scheme generator configured to provide a human-computer interaction system interface;
the bionic process parameter database configured to output laser processing parameters and environmental medium parameters to the processing scheme generator;
the processing scheme generator configured to take a 3D workpiece model added with bionic processing unit information and the bionic processing parameter information output from the bionic process parameter database as input, and configured to adopt an intelligent algorithm to generate corresponding control command sequences respectively for a laser, a six-degree-of-freedom joint robot and an auxiliary device which comprises generating a cooperative working time sequence of the six-degree-of-freedom joint robot, the laser and the auxiliary device; and the control command sequences include a time control sequence and a device command control sequence, and the control command sequences containing respective control information and mutual synchronization information;
wherein the integrated synchronization controller is configured to send the control commands respectively to the laser controller, the robot motion controller and the auxiliary device controller thereby completing coordinated control of the processing execution system, whereby
the input of the integrated synchronization controller includes the time control sequence and the device command control sequence generated by the processing scheme generator, and command execution feedback information of the six-degree-of-freedom joint robot, the laser and the auxiliary device are received at the same time; and the output of the integrated synchronization controller includes control commands respectively sent to the laser controller, the robot motion controller and the auxiliary device controller;
the twin virtual system includes a manufacturing terminal entity scene twin model, a process data real-time acquisition module, a bionic information parameter offline acquisition module, a process offline simulation module and a process data controller;
the process data controller configured to receive process data information from the manufacturing terminal entity scene twin model, the process data real-time acquisition module, the bionic information parameter offline acquisition module and the process offline simulation module; the process offline simulation module configured to receive information from the process data real-time acquisition module and the bionic information parameter offline acquisition module, and configured to transmit process parameter regulation results of the process data controller to the processing scheme generator to generate control command sequences; and the bionic process parameter database configured to receive process information of the bionic information parameter offline acquisition module and configured to update process data in the bionic process parameter database in real time; and
the processing execution system includes a laser, an optical fiber coupling transmission unit, a laser processing work head, a six-degree-of-freedom joint robot and an auxiliary device; the laser being connected to the laser processing work head via the optical fiber coupling transmission unit, and the laser processing work head arranged at a head end of the six-degree-of-freedom joint robot configured to realize a multi-dimensional motion of the laser processing work head and laser processing.

Furthermore, the digital twin-based intelligent manufacturing system is configured to generate control command sequences, wherein the control command sequences being generated in the following manner: the processing scheme generator first allowing a user to determine center coordinates of the six-degree-of-freedom joint robot, a workpiece fixture and the workpiece, so that the overall layout and positioning of the processing scheme is completed, and then the processing scheme generator traversing bionic processing positions and areas in the 3D workpiece model: first extracting characteristic parameters of a unit body to be processed from the 3D workpiece model, and then using the processing information of the bionic processing unit to find the optimized process parameter data in the bionic process parameter database; next, combining the laser processing parameters related to a path with a curve of the bionic unit to be processed to calculate walking path, speed, attitude and other information of the six-degree-of-freedom joint robot; finally, respectively extracting relevant control information of the six-degree-of-freedom joint robot, the laser and the auxiliary device in a classified manner, and respectively converting the relevant control information, in a manner of rule mapping, into code sequences that can be recognized by the laser controller, the robot motion controller and the auxiliary device controller; and at the same time, generating a cooperative working time sequence of the six-degree-of-freedom joint robot, the laser and the auxiliary device, and establishing a corresponding mapping relationship between the code sequences and the time sequence, so that the integrated synchronization controller can perform a uniform control thereon to enable coordinated work thereof.

Furthermore, the integrated synchronization controller configured to send the control commands respectively to the laser controller, the robot motion controller and the auxiliary device controller in a specific manner as follows:
according to the time control sequence, first respectively finding and sending the corresponding control commands of the laser controller, the robot motion controller and the auxiliary device controller, receiving feedback information of the six-degree-of-freedom joint robot, the laser and the auxiliary device at the same time, comparing the feedback information of the six-degree-of-freedom joint robot, the laser and the auxiliary device with execution expectations, and in response to the feedback information meeting the expectations, indicating that the six-degree-of-freedom joint robot, the laser and the auxiliary device operate well synchronously, and continuing to send subsequent control commands; and in response to the feedback information not meeting the expectations, invoking a preset synchronization processing mechanism for processing according to the feedback conditions of the six-degree-of-freedom joint robot, the laser and the auxiliary device, and then starting the execution of subsequent commands in response to the three devices being in sync again.

Furthermore, the process data controller configured to transmit process parameter regulation results to the processing scheme generator in a specific manner as follows:
the processing scheme generator first traversing in the manufacturing terminal entity scene twin model and the bionic process parameter database according to the bionic information parameters set by the user, receiving initial processing parameters, the process data real-time acquisition module realizing the acquisition of process data such as processing terminal scene perception data, in-situ molten pool temperature and splash process data by means of a sensor and a visual acquisition device during the bionic processing, the process data controller receiving relevant process information from the process data real-time acquisition module and the process offline simulation module for comprehensive analysis, judging the accuracy of the bionic information parameters and performing real-time adjustment on the process parameters, and performing real-time data interaction with the manufacturing terminal entity scene twin model; the bionic information parameter offline acquisition module updating the process information in the bionic process parameter database via the process data controller by performing offline acquisition and entry on bionic processing elements; the process offline simulation module receiving the information from the process data real-time acquisition module and the bionic information parameter offline acquisition module for performing offline simulation of the bionic manufacturing process, and the manufacturing terminal entity scene twin model carrying on study by means of data interaction with the process offline simulation module, and adjusting the model.

Furthermore, the processing methods of the bionic unit include phase transformation, fusion, engraving, cladding and alloying; the workpiece matrix material parameters include material grade, absorption coefficient and thermal conductivity; and the characteristic parameters of the unit body include the shape, spacing, depth, width and average microhardness of the unit body.

The present invention has the beneficial effects as follows:
1. There are fewer human participation factors during the whole processing, and the degree of automation and intelligence is higher. A customer only needs to provide a human-machine interface system with a CAD model of the test pieces or parts to be processed, the designed bionic unit body characteristic parameters and material parameters before processing, the system can automatically generate laser processing parameters and control programs of the robot and the auxiliary device, which reduces the work of the selection of a large number of process parameters for processing personnel and robot teaching.
2. The cost of bionic functional surface processing is reduced, and the production efficiency and processing quality are improved. The bionic process parameter database makes the determination of processing parameters get rid of the optimization work of the previous process parameters, and also avoids processing quality problems caused by errors of artificial selection of process parameters. And the manufacturing system is completely automatically programmed by programming software, having more precise means than teaching programming.
3. A set of guided man-machine interface system is provided, which not only can directly input parameter information of the designed bionic functional surfaces, but also simplifies the whole operation process.
4. The system adopts a six-degree-of-freedom joint robot to carry a laser processing work head, which increases the flexibility of the entire manufacturing system. The six-degree-of-freedom joint robot can carry a laser processing work head to process parts, thereby realizing the bionic manufacturing of complex-shaped surfaces of large workpieces.

### BRIEF DESCRIPTION OF THE DRAWINGS

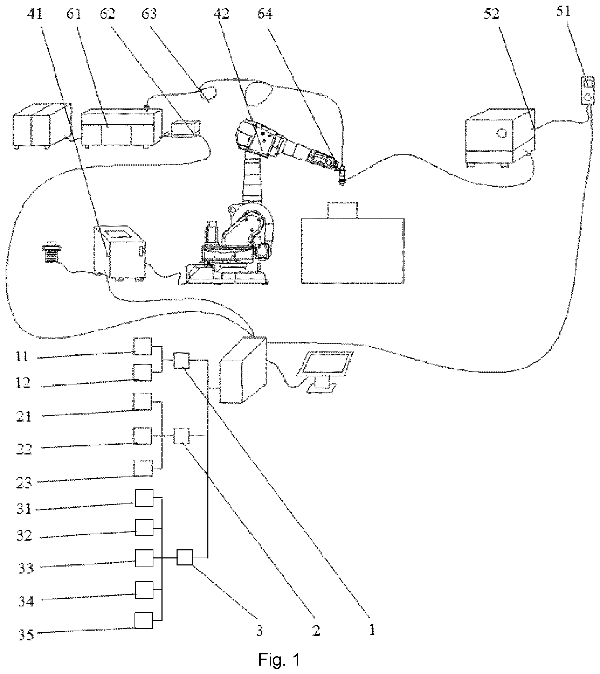

Fig. 1 is a schematic diagram of an overall structural composition of a digital twin-based intelligent manufacturing system according to the present invention.

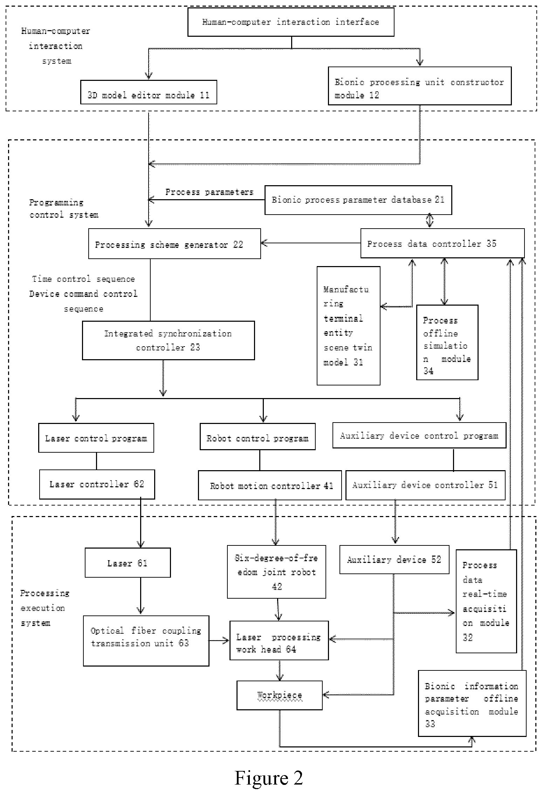

Fig. 2 is a schematic diagram of a working principle of a digital twin-based intelligent manufacturing system according to the present invention.

### DETAILED DESCRIPTION OF THE PREFERRED EMBODIMENTS

Referring to the accompanying drawings, a digital twin-based intelligent manufacturing system is a multi-part coordinated software and hardware system composed of a human-computer interaction system 1, a programming control system 2, a twin virtual system 3 and a processing execution system 6;
the human-computer interaction system includes a 3D model editor module 11 and a bionic processing unit constructor module 12; the human-computer interaction system is used for input and transmission of characteristic parameters of parts to be processed and bionic unit information; the 3D model editor module 11 outputs the parameters of the parts to be processed (a 3D workpiece model) to a processing scheme generator 22, and the bionic processing unit constructor module 12 outputs the bionic information parameters to the processing scheme generator 22;
the human-computer interaction system is a window for customer demand information input and can perform parametrical customization on the parts to be processed and a bionic unit, and the human-computer interaction system mainly refers to interface system software, which is specially programmed for the design and preparation of bionic coupled surfaces; the preparation work in the early stage of processing only requires the customer to input the information of the bionic unit design according to the requirements of the bionic unit information construction wizard; the interface system software mainly includes the 3D model editor module 11 and the bionic processing unit constructor module 12, and the 3D model editor module 11 can perform CAD modeling, loading, display, manipulation, change, storage, data export etc. on the parts to be processed;
the bionic processing unit constructor module 12 uses a wizard construction method to guide the user to complete the setting of bionic information parameters step by step, with the bionic information parameters include the selection of a bionic unit processing method (phase transformation, fusion, engraving, cladding and alloying), the setting of workpiece matrix material parameters (material grade, absorption coefficient, thermal conductivity, etc.), unit body characteristic parameters (shape, spacing, depth, width and average microhardness of the unit body), and the construction and calibration of processing position and area; and if the processing method in the bionic processing unit information parameters is selected as cladding or alloying, a dialog box for adding powder material parameters needs to be popped up to set up cladding or alloy powder parameters (grade, composition, absorption coefficient, thermal conductivity, etc.);
the programming control system 2 includes a high-performance computer, a laser controller 62, a robot motion controller 41 and an auxiliary device controller 51, with the laser controller 62, the robot motion controller 41 and the auxiliary device controller 51 being directly connected to the high-performance computer via a serial port, and the programming control system 2 being used for converting the characteristic parameters of parts to be processed and the bionic unit information into a motion trajectory of a six-degree-of-freedom joint robot 42 and processing parameters, and an integrated synchronization controller 23 on the high-performance computer realizing integrated control on the whole system;
the high-performance computer is integrated with a bionic process parameter database 21, the processing scheme generator 22 and an integrated synchronization controller 23, with the bionic process parameter database 21 and the processing scheme generator 22 providing a human-computer interaction system interface;
the bionic process parameter database 21 outputs laser processing parameters (wavelength, mode, power density, frequency, pulse width, defocus amount, light spot diameter, scanning speed, etc.) and environmental medium parameters (airflow angle, speed, powder flow, water film thickness, etc.) to the processing scheme generator 22, and the bionic process parameter database 21 is constructed by relying on a large number of theoretical and experimental data and parameters;
the processing scheme generator 22 takes a 3D workpiece model added with bionic processing unit information and the bionic processing parameter information output from the bionic process parameter database 21 as input, and adopts an intelligent algorithm to generate corresponding control command sequences respectively for a laser 61, a six-degree-of-freedom joint robot 42 and an auxiliary device 52; and the control command sequences not only contain respective control information, but also contain mutual synchronization information;
its working principle is as follows: the processing scheme generator 22 first allowing a user to determine center coordinates of the six-degree-of-freedom joint robot 42, a workpiece fixture and the workpiece 6, so that the overall layout and positioning of the processing scheme is completed, and then the processing scheme generator 22 traversing bionic processing positions and areas in the 3D workpiece model: first extracting characteristic parameters (shape, spacing, depth, width and average microhardness of the unit body) of a unit body to be processed from the 3D workpiece model, and then using the processing information of the bionic processing unit to find the optimized process parameter data in the bionic process parameter database 21; next, combining the laser processing parameters (defocus amount and scanning speed) related to a path with a curve of the bionic unit to be processed to calculate walking path, speed, attitude and other information of the six-degree-of-freedom joint robot 42, where these information can also be obtained by connecting the robot motion controller 41 into the processing scheme generator 22 and instructing the six-degree-of-freedom joint robot 42; finally, respectively extracting relevant control information of the six-degree-of-freedom joint robot 42, the laser 61 and the auxiliary device 52 in a classified manner, and respectively converting the relevant control information, in a manner of rule mapping, into code sequences that can be recognized by the laser controller 62, the robot motion controller 41 and the auxiliary device controller 51; and at the same time, generating a cooperative working time sequence of the six-degree-of-freedom joint robot 42, the laser 61 and the auxiliary device 52, and establishing a corresponding mapping relationship between the code sequences and the time sequence, so that the integrated synchronization controller 23 can perform a uniform control thereon to enable coordinated work thereof;
the coordinated control of the processing execution system is mainly completed by the integrated synchronization controller 23, which integrates the control on the six-degree-of-freedom joint robot 42, the laser 61 and the auxiliary device 52 for unified scheduling management, so as to achieve synchronous and coordinated operation among the six-degree-of-freedom joint robot 42, the laser 61 and the auxiliary device 52; the input of the integrated synchronization controller 23 includes the time control sequence and the device command control sequence generated by the processing scheme generator 22, and command execution feedback information of the six-degree-of-freedom joint robot 42, the laser 61 and the auxiliary device 52 are received at the same time; the output of the integrated synchronization controller 23 includes control commands respectively sent to the laser controller 62, the robot motion controller 41 and the auxiliary device controller 51, and its working process is as follows: according to the time control sequence, first respectively finding and sending the corresponding control commands of the laser controller 62, the robot motion controller 41 and the auxiliary device controller 51, receiving feedback information of the six-degree-of-freedom joint robot 42, the laser 61 and the auxiliary device 52 at the same time, comparing the feedback information of the three with execution expectations, and if the feedback information meets the expectations, indicating that the six-degree-of-freedom joint robot 42, the laser 61 and the auxiliary device 52 operate well synchronously, and continuing to send subsequent control commands; and if the feedback information does not meet the expectations, invoking a preset synchronization processing mechanism for processing (for example, certain equipment stops waiting) according to the feedback conditions of the six-degree-of-freedom joint robot 42, the laser 61 and the auxiliary device 52, and then starting the execution of subsequent commands when the three devices are in sync again;
the twin virtual system 3 includes a manufacturing terminal entity scene twin model 31, a process data real-time acquisition module 32, a bionic information parameter offline acquisition module 33, a process offline simulation module 34 and a process data controller 35; the manufacturing terminal entity scene twin model 31 contains physical entity scene models and a large number of modeled and formulated process models; and the twin virtual system 3 is used for real-time monitoring and offline simulation of processing quality and bionic information during bionic processing, thereby realizing real-time adjustment and feedback of process parameters;
the process data controller 35 receives process data information from the manufacturing terminal entity scene twin model 31, the process data real-time acquisition module 32, the bionic information parameter offline acquisition module 33 and the process offline simulation module 34; the process offline simulation module 34 receives information from the process data real-time acquisition module 32 and the bionic information parameter offline acquisition module 33, and process parameter regulation results of the process data controller 35 are transmitted to the processing scheme generator 22 to generate control command sequences; and the bionic process parameter database 21 receives process information of the bionic information parameter offline acquisition module 33 and updates process data in the bionic process parameter database 21 in real time;
the process data controller 35 transmits process parameter regulation results to the processing scheme generator 22 in a specific manner as follows:
the processing scheme generator 22 first traversing in the manufacturing terminal entity scene twin model 31 and the bionic process parameter database 21 according to the bionic information parameters set by the user, receiving initial processing parameters, the process data real-time acquisition module 32 realizing the acquisition of process data such as processing terminal scene perception data, in-situ molten pool temperature and splash process data by means of a sensor and a visual acquisition device during the bionic processing, the process data controller 35 receiving relevant process information from the process data real-time acquisition module 32 and the process offline simulation module 34 for comprehensive analysis, judging the accuracy of the bionic information parameters and performing real-time adjustment on the process parameters, and performing real-time data interaction with the manufacturing terminal entity scene twin model 31; the bionic information parameter offline acquisition module 33 updating the process information in the bionic process parameter database 21 via the process data controller 35 by performing offline acquisition and entry on bionic processing elements; the process offline simulation module 34 receiving the information from the process data real-time acquisition module 32 and the bionic information parameter offline acquisition module 33 for performing offline simulation of the bionic manufacturing process, and the manufacturing terminal entity scene twin model 31 carrying on study by means of data interaction with the process offline simulation module 34, and adjusting the model; and
the processing execution system includes a laser 61, an optical fiber coupling transmission unit 63, a laser processing work head 64, a six-degree-of-freedom joint robot 42 and an auxiliary device 52; the laser 61 is connected to the laser processing work head 64 via the optical fiber coupling transmission unit 63, and the laser processing work head 64 arranged at a head end of the six-degree-of-freedom joint robot 42 realizes a multi-dimensional motion of the laser processing work head 64 and laser processing.

Furthermore, the processing execution system can be freely assembled with a variety of laser light sources such as optical fibers, semiconductors and lamp pumping, and laser processing terminals; laser beams are transmitted to the laser processing work head 64 via the optical fiber coupling transmission unit 63, which can perform phase transformation, fusion, engraving, cladding, alloying and sintering processing on metal or non-metal parts; and the interaction between laser and material is used to obtain an ideal coupled bionic unit, with the rated power of the laser being greater than or equal to 500W.

Furthermore, the six-degree-of-freedom joint robot 42 is provided with a detection and feedback device, and the six-degree-of-freedom joint robot 42 can carry the laser processing work head 64 to complete the processing operation according to a planned path; and the detection and feedback device includes position detection, collision detection, etc., and can make the robot precisely positioned, prevent collisions, etc.

Furthermore, the auxiliary device 52 contains a fixture (a clamp), a sensing and detection device, etc., and also includes providing devices for environment, medium and additive materials, etc., as well as necessary tools for free selection and loading to realize the processing of different test pieces and parts.

The auxiliary device controller 51 may include a synchronous powder feeding controller, an ambient gas controller, a processing medium controller, etc., which respectively provide materials, environments, media, etc. for the preparation process of the bionic functional surfaces according to the requirements of the processing technology.

Furthermore, the 3D model editor module 11 is a CAD model editor module.

Working principle and use process of the present invention:
the user enters the 3D model editor module 11 of the human-computer interaction interface system, and creates or imports a CAD model of the test pieces or parts to be processed; in the 3D model editor module 11, the customer can also carry out operations such as modification and exporting on the creation or import of the test pieces or parts to be processed; and after entering the bionic processing unit builder module 12, the construction of the bionic processing unit is completed step by step by using the construction wizard provided by the bionic processing unit builder module 12, involving first selecting the type of processing methods, such as phase transformation, fusion, engraving, cladding, alloying, etc., and then the system popping up different selection pages according to the user's selection to prompt the user to enter the required workpiece matrix material parameter information (material grade, composition, absorption coefficient, thermal conductivity, etc.) of selected processing types;
if the processing method is phase transformation, fusion or engraving, the user only needs to provide the workpiece matrix material parameter information (material grade, composition, absorption coefficient, thermal conductivity, etc.);
if the processing method is cladding or alloying, the user also needs to provide parameter information such as the grade, composition, absorption coefficient, thermal conductivity coefficient, powder type and particle size of the added powder material except for only needing to provide the workpiece matrix material parameter information (material grade, composition, absorption coefficient, thermal conductivity, etc.);
after the input information is confirmed, the system automatically returns to the 3D model editing module 11, and by taking the created or loaded 3D model of the test pieces or parts to be processed as the blueprint, the bionic processing unit that needs to be processed is calibrated on the 3D model by means of a 3D modeling operation on its basis, so that the processing curve can be generated in the later stage; the system can provide 3D model modeling tools suitable for the selection results according to the type of processing methods selected mentioned above, the workpiece matrix material parameters and/or powder material parameters, so that the user can calibrate positions and areas that need to be subjected to bionic processing on the 3D model, containing calibration tools such as points, lines and surfaces;
after the bionic processing unit information is input and confirmed, the system automatically enters the processing scheme generator 22 in the programming control system, and the processing scheme generator 22, by taking the 3D workpiece model that is added with the bionic processing unit information, and bionic process parameter information as input, uses an intelligent method to generate corresponding control command sequences for the laser 61, the six-degree-of-freedom joint robot 42 and the auxiliary device 52, respectively; and
the processing scheme generator 22 first allowing a user to determine center coordinates of the six-degree-of-freedom joint robot 42, a workpiece fixture and the workpiece, so that the overall layout and positioning of the processing scheme is completed, and then the processing scheme generator 22 traversing bionic processing positions and areas in the 3D workpiece model: first extracting characteristic parameters of a unit body to be processed (shape, spacing, depth, width and average microhardness of the unit body) from the 3D workpiece model, and then using the processing information of the bionic processing unit to find the optimized process parameter data (laser wavelength, mode, power density, defocus amount, scanning speed, pulse width, frequency, shielding gas flow, angle, etc.) in the bionic process parameter database 21; at the same time, the processing scheme generator 22 extracting a curve of the bionic processing unit to be processed from the 3D workpiece model, next, combining the laser processing parameters (such as defocus amount and scanning speed) related to a path with the curve of the bionic processing unit to be processed to calculate walking path, walking speed, attitude and other information of the six-degree-of-freedom joint robot 42, where these information can also be obtained by connecting the robot motion controller 41 into the processing scheme generator 22 and instructing and programming the six-degree-of-freedom joint robot 42; finally, respectively extracting relevant control information of the six-degree-of-freedom joint robot 42, the laser 61 and the auxiliary device 52 in a classified manner, and respectively converting the relevant control information, in a manner of rule mapping, into code sequences that can be recognized by the laser controller 62, the robot motion controller 41 and the auxiliary device controller 51; and at the same time, generating a cooperative working time sequence of the six-degree-of-freedom joint robot 42, the laser 61 and the auxiliary device 52, and establishing a corresponding mapping relationship between the code sequences and the time sequence, so that the integrated synchronization controller 23 can perform a uniform control thereon to enable coordinated work thereof.

## Claims

1. A digital twin-based intelligent manufacturing system, composed of a human-computer interaction system (1), a programming control system (2), a twin virtual system (3) and a processing execution system (6), wherein
the human-computer interaction system comprises a 3D model editor module (11) and a bionic processing unit constructor module (12); a processing scheme generator (22) configured to receive parameters of parts to be processed from the 3D model editor module (11) and bionic information parameters of the bionic processing unit constructor module (12);
the bionic information parameters comprise the selection of a bionic unit processing method, the setting of workpiece matrix material parameters, unit body characteristic parameters, and the construction and calibration of processing position and area;
the programming control system (2) comprises a high-performance computer, a laser controller (62), a robot motion controller (41) and an auxiliary device controller (51), with the laser controller (62), the robot motion controller (41) and the auxiliary device controller (51) being directly connected to the high-performance computer via a serial port;
the high-performance computer being integrated with a bionic process parameter database (21), the processing scheme generator (22) and an integrated synchronization controller (23), with the bionic process parameter database (21) and the processing scheme generator (22) configured to provide a human-computer interaction system interface;
the bionic process parameter database (21) configured to output laser processing parameters and environmental medium parameters to the processing scheme generator (22);
the processing scheme generator (22) configured to take a 3D workpiece model added with bionic processing unit information and the bionic processing parameter information output from the bionic process parameter database (21) as input, and configured to adopt an intelligent algorithm to generate corresponding control command sequences respectively for a laser (61), a six-degree-of-freedom joint robot (42) and an auxiliary device (52) which comprises generating a cooperative working time sequence of the six-degree-of-freedom joint robot (42), the laser (61) and the auxiliary device (52); and
the control command sequences comprise a time control sequence and a device command control sequence, and the control command sequences containing respective control information and mutual synchronization information;
wherein the integrated synchronization controller (23) is configured to send the control commands respectively to the laser controller (62), the robot motion controller (41) and the auxiliary device controller (51) thereby completing coordinated control of the processing execution system, whereby
the input of the integrated synchronization controller (23) includes the time control sequence and the device command control sequence generated by the processing scheme generator (22), and command execution feedback information of the six-degree-of-freedom joint robot (42), the laser (61) and the auxiliary device (52) are received at the same time; and the output of the integrated synchronization controller (23) includes control commands respectively sent to the laser controller (62), the robot motion controller (41) and the auxiliary device controller (51);
the twin virtual system (3) comprises a manufacturing terminal entity scene twin model (31), a process data real-time acquisition module (32), a bionic information parameter offline acquisition module (33), a process offline simulation module (34) and a process data controller (35);
the process data controller (35) configured to receive process data information from the manufacturing terminal entity scene twin model (31), the process data real-time acquisition module (32), the bionic information parameter offline acquisition module (33) and the process offline simulation module (34); the process offline simulation module (34) configured to receive information from the process data real-time acquisition module (32) and the bionic information parameter offline acquisition module (33), and configured to transmit process parameter regulation results of the process data controller (35) to the processing scheme generator (22) to generate control command sequences; and the bionic process parameter database (21) configured to receive process information of the bionic information parameter offline acquisition module (33) and configured to update process data in the bionic process parameter database (21) in real time; and
the processing execution system comprises a laser (61), an optical fiber coupling transmission unit (63), a laser processing work head (64), the six-degree-of-freedom joint robot (42), and an auxiliary device (52); the laser (61) being connected to the laser processing work head (64) via the optical fiber coupling transmission unit (63), and the laser processing work head (64) arranged at a head end of the six-degree-of-freedom joint robot (42) configured to realize a multi-dimensional motion of the laser processing work head (64) and laser processing.

2. The digital twin-based intelligent manufacturing system of claim 1, the digital twin-based intelligent manufacturing system is configured to generate control command sequences, wherein the control command sequences being generated in the following manner:
the processing scheme generator (22) first allowing a user to determine center coordinates of the six-degree-of-freedom joint robot (42), a workpiece fixture and the workpiece, so that the overall layout and positioning of the processing scheme is completed, and then the processing scheme generator (22) traversing bionic processing positions and areas in the 3D workpiece model: first extracting characteristic parameters of a unit body to be processed from the 3D workpiece model, and then using the processing information of the bionic processing unit to find the optimized process parameter data in the bionic process parameter database (21); next, combining the laser processing parameters related to a path with a curve of the bionic unit to be processed to calculate walking path, speed, attitude and other information of the six-degree-of-freedom joint robot (42); finally, respectively extracting the relevant control information of the six-degree-of-freedom joint robot (42), the laser (61) and the auxiliary device (52) in a classified manner, and respectively converting the relevant control information, in a manner of rule mapping, into code sequences that can be recognized by the laser controller (62), the robot motion controller (41) and the auxiliary device controller (51); and at the same time, generating a cooperative working time sequence of the six-degree-of-freedom joint robot (42), the laser (61) and the auxiliary device (52), and establishing a corresponding mapping relationship between the code sequences and the time sequence, so that the integrated synchronization controller (23) performs a uniform control thereon to enable coordinated work thereof.

3. The digital twin-based intelligent manufacturing system of claim 1, wherein the integrated synchronization controller (23) configured to send the control commands respectively to the laser controller (62), the robot motion controller (41) and the auxiliary device controller (51) in a specific manner as follows:
according to the time control sequence, first respectively finding and sending the corresponding control commands of the laser controller (62), the robot motion controller (41) and the auxiliary device controller (51), receiving feedback information of the six-degree-of-freedom joint robot (42), the laser (61) and the auxiliary device (52) at the same time, comparing the feedback information of the six-degree-of-freedom joint robot (42), the laser (61) and the auxiliary device (52) with execution expectations, and in response to the feedback information meeting the expectations, indicating that the six-degree-of-freedom joint robot (42), the laser (61) and the auxiliary device (52) operate well synchronously, and continuing to send subsequent control commands; and in response to the feedback information not meeting the expectations, invoking a preset synchronization processing mechanism for processing according to the feedback conditions of the six-degree-of-freedom joint robot (42), the laser (61) and the auxiliary device (52), and then starting the execution of subsequent commands in response to the three devices being in sync again.

4. The digital twin-based intelligent manufacturing system of claim 1, wherein the process data controller (35) configured to transmit process parameter regulation results to the processing scheme generator (22) in a specific manner as follows:
the processing scheme generator (22) first traversing in the manufacturing terminal entity scene twin model (31) and the bionic process parameter database (21) according to the bionic information parameters set by the user, receiving initial processing parameters, the process data real-time acquisition module (32) realizing the acquisition of process data such as processing terminal scene perception data, in-situ molten pool temperature and splash process data by means of a sensor and a visual acquisition device during the bionic processing, the process data controller (35) receiving relevant process information from the process data real-time acquisition module (32) and the process offline simulation module (34) for comprehensive analysis, judging the accuracy of the bionic information parameters and performing real-time adjustment on the process parameters, and performing real-time data interaction with the manufacturing terminal entity scene twin model (31); the bionic information parameter offline acquisition module (33) updating the process information in the bionic process parameter database (21) via the process data controller (35) by performing offline acquisition and entry on bionic processing elements; the process offline simulation module (34) receiving the information from the process data real-time acquisition module (32) and the bionic information parameter offline acquisition module (33) for performing offline simulation of the bionic manufacturing process, and the manufacturing terminal entity scene twin model (31) carrying on study by means of data interaction with the process offline simulation module (34), and adjusting the model.

5. The digital twin-based intelligent manufacturing system of claim 1, wherein the six-degree-of-freedom joint robot (42) being provided with a detection and feedback device, the detection and feedback device comprising a position detection and feedback device and a collision detection and feedback device.

6. The digital twin-based intelligent manufacturing system of claim 1, wherein the auxiliary device (52) contains a clamp, a sensing and detection device, an ambient gas providing device, a processing medium providing device and a synchronous powder feeding device.

7. The digital twin-based intelligent manufacturing system of claim 1, wherein the 3D model editor module (11) is a CAD model editor module, and the 3D model editor module (11) configured to perform CAD modeling, loading, display, manipulation, change, storage and data export on the parts to be processed.

8. The digital twin-based intelligent manufacturing system of claim 1, wherein the processing methods of the bionic unit comprise phase transformation, fusion, engraving, cladding and alloying; the workpiece matrix material parameters comprise material grade, absorption coefficient and thermal conductivity; and the characteristic parameters of the unit body comprise the shape, spacing, depth, width and average microhardness of the unit body.

## Patentansprüche

1. Intelligentes Fertigungssystem auf der Basis des digitalen Zwillings, das aus einem Mensch-Computer-Interaktionssystem (1), einem Programmiersteuerungssystem (2), einem virtuellen Zwillingssystem (3) und einem Verarbeitungsausführungssystem (6) besteht, wobei
das Mensch-Computer-Interaktionssystem ein 3D-Modell-Editormodul (11) und ein bionische Verarbeitungseinheit-Konstruktormodul (12) umfasst; einen Verarbeitungsschema-Generator (22), der so konfiguriert ist, dass er Parameter der zu verarbeitenden Teile vom 3D-Modelleditormodul (11) und bionische Informationsparameter des bionische Verarbeitungseinheit-Konstruktormodul (12) empfängt;
die bionischen Informationsparameter die Auswahl einer Verarbeitungsmethode für eine bionische Einheit, die Einstellung von Materialparametern der Werkstückmatrix, charakteristischen Parametern des Einheitskörpers und die Konstruktion und Kalibrierung der Bearbeitungsposition und -bereiche umfassen;
das Programmiersteuerungssystem (2) einen Hochleistungsrechner, eine Lasersteuerung (62), eine Roboterbewegungssteuerung (41) und eine Hilfsgerätesteuerung (51) umfasst, wobei die Lasersteuerung (62), die Roboterbewegungssteuerung ( 41) und die Hilfsgerätesteuerung (51) über eine serielle Schnittstelle direkt mit dem Hochleistungsrechner verbunden sind;
der Hochleistungsrechner mit einer bionischen Prozessparameter-Datenbank (21), dem Verarbeitungsschema-Generator (22) und einer integrierten Synchronisationssteuerung (23) integriert ist, wobei die bionische Prozessparameter-Datenbank (21) und der Verarbeitungsschema-Generator (22) so konfiguriert sind, dass sie eine Mensch-Computer-Interaktionssystem-Schnittstelle bereitzustellen;
die bionische Prozessparameter-Datenbank (21) so konfiguriert ist, dass sie Laserverarbeitungs-Parameter und Umgebungsmedium-Parameter an den Verarbeitungsschema-Generator (22) ausgibt;
wobei der Verarbeitungsschema-Generator (22) so konfiguriert ist, dass er ein 3D-Werkstückmodellmit der bionische Verarbeitungseinheit-Informationen und bionische Verarbeitungsparameter-Informationen, die von der bionischen Prozessparameter-Datenbank (21) ausgegebenen, als Eingabe nimmt, und so konfiguriert ist, dass er einen intelligenten Algorithmus annimmt, um eine entsprechende Steuerbefehlssequenzen jeweils für einen Laser (61), einen Sechs-Freiheits-Gelenkroboter (42) und ein Hilfsgerät (52) zu erzeugen, das das Erzeugen einer kooperativen Arbeitszeitsequenz des Sechs-Freiheits-Gelenkroboters (42), den Laser (61) und das Hilfsgerät (52 ) umfasst; und
die Steuerbefehlssequenzen eine Zeitsteuersequenz und eine Gerätebefehlssteuersequenz umfassen, und die Steuerbefehlssequenzen entsprechende Steuerinformationen und gegenseitige Synchronisationsinformationen enthalten;
wobei die integrierte Synchronisationsteuerung (23) so konfiguriert ist, dass er die Steuerbefehle jeweils an den Lasercontroller (62), die Roboterbewegungssteuerung (41) und die Hilfsgerätesteuerung (51) sendet, wodurch eine koordinierte Steuerung des Verarbeitungsausführungssystems abgeschlossen wird, wodurch
die Eingabe der integrierten Synchronisationssteuerung (23) die Zeitsteuerungssequenz und die Gerätebefehlssteuerungssequenz enthält, die von dem Verarbeitungsschema-Generator (22) erzeugt werden, und Befehlsausf ü hrungs-R ü ckmeldeinformationen des Sechs-Freiheits-Gelenkroboters (42), der Laser (61) und das Hilfsgerät (52) gleichzeitig empfangen werden; und die Ausgabe der integrierten Synchronisationssteuerung (23) Steuerbefehle umfasst, die jeweils an den Lasercontroller (62), die Roboterbewegungssteuerung (41) und die Hilfsgerätesteuerung (51) gesendet werden;
das virtuelle Zwillingssystem (3) ein Fertigungsterminal-Entitätsszenen-Zwillingsmodell (31), ein Echtzeit-Prozessdatenerfassungsmodul (32), ein Offline-Erfassungsmodul für bionische Informationsparameter (33) und ein Offline-Prozesssimulationsmodul (34) und einen Prozessdatencontroller (35) umfasst;
der Prozessdatencontroller (35) so konfiguriert ist, dass er Prozessdateninformationen vom Fertigungsterminal-Entitätsszenen-Zwillingsmodell (31), dem Echtzeit-Prozessdatenerfassungsmodul (32), dem Offline-Erfassungsmodul für bionische Informationsparameter (33) und dem Offline-Prozesssimulationsmodul (34) empfängt;
das Offline-Prozesssimulationsmodul (34), das zum Empfangen von Informationen vom Echtzeit-Prozessdatenerfassungsmodul (32) und dem Offline-Erfassungsmodul für bionische Informationsparameter (33) konfiguriert ist, auch zum Übertragen von Prozessparameter-Regelungsergebnissen des Prozessdatencontrollers (35) an den Verarbeitungsschema-Generator (22), um Steuerbefehlssequenzen zu erzeugen, konfiguriert ist; und die bionische Prozessparameter-Datenbank (21), die dazu konfiguriert ist, Prozessinformationen des Offline-Erfassungsmoduls für bionische Informationsparameter (33) zu empfangen, und dazu konfiguriert ist, Prozessdaten in der bionischen Prozessparameter-Datenbank (21) in Echtzeit zu aktualisieren; und
das Verarbeitungsausführungssystem einen Laser (61), eine optische Faserkopplungsübertragungseinheit (63), einen Laserbearbeitungsarbeitskopf (64), den Sechs-Freiheitsgrad-Gelenkroboter (42) und ein Hilfsgerät (52) umfasst; wobei der Laser (61) über die optische Faserkopplungs-Übertragungseinheit (63) mit dem Laserbearbeitungsarbeitskopf (64) verbunden ist, und der Laserbearbeitungsarbeitskopf (64) an einem Kopfende des Sechs-Freiheitsgrad-Gelenkroboters (42) angeordnet ist, der so konfiguriert ist, dass er eine mehrdimensionale Bewegung des Laserbearbeitungsarbeitskopfes (64) und der Laserbearbeitung realisiert.

2. Intelligentes Fertigungssystem auf der Basis des digitalen Zwillings nach Anspruch 1, wobei das auf einem digitalen Zwilling basierendes intelligentes Fertigungssystem so konfiguriert ist, dass es Steuerbefehlssequenzen generiert, wobei die Steuerbefehlssequenzen auf folgende Weise generiert werden:
der Verarbeitungsschema-Generator (22) einem Benutzer zunächst ermöglicht, die Mittelpunktskoordinaten des Sechs-Freiheits-Gelenkroboters, einer Werkstückhalterung und des Werkstücks zu bestimmen, so dass das Gesamtlayout und die Positionierung des Verarbeitungsschemas fertiggestellt sind, und dann durchläuft der Verarbeitungsschema-Generator (22) bionische Verarbeitungspositionen und -bereiche im 3D-Werkst ü ckmodell: zunächst Extrahieren charakteristischer Parameter eines zu bearbeitenden Einheitskörpers aus dem 3D-Werkst ü ckmodell und anschließendes Verwenden der Verarbeitungsinformationen der bionischen Verarbeitungseinheit zum Auffinden der optimierten Prozessparameterdaten in der bionischen Prozessparameter-Datenbank (21); als nächstes werden die Laserbearbeitungsparameter, die sich auf einen Weg beziehen, mit einer Kurve der zu bearbeitenden bionischen Einheit kombiniert, um den Gehweg, die Geschwindigkeit, die Haltung und andere Informationen des Sechs-Freiheits-Gelenkroboters zu berechnen; schließlich, jeweiliges Extrahieren der relevanten Steuerinformationen des Sechs-Freiheits-Gelenkroboters, des Lasers (61) und des Hilfsgeräts (52) in klassifizierter Weise und jeweiliges Umwandeln der relevanten Steuerinformationen, in a Art der Regelabbildung in Codesequenzen, die von der Lasersteuerung (62), der Roboterbewegungssteuerung (41) und der Hilfsgerätesteuerung (51) erkannt werden können; und gleichzeitig Erzeugen einer kooperativen Arbeitszeitsequenz des Sechs-Freiheits-Gelenkroboters, des Lasers (61) und des Hilfsgeräts (52) und Herstellen einer entsprechenden Abbildungsbeziehung zwischen den Codesequenzen und die zeitliche Abfolge, so dass die integrierte Synchronisationssteuerung (23) eine einheitliche Steuerung darauf durchführt, um deren koordiniertes Arbeiten zu ermöglichen.

3. Intelligentes Fertigungssystem auf der Basis des digitalen Zwillings nach Anspruch 1, wobei die integrierte Synchronisationssteuerung (23) so konfiguriert ist, dass er die Steuerbefehle jeweils an den Lasercontroller (62), die Roboterbewegungssteuerung (41) und die Hilfsgerätesteuerung (51) auf eine bestimmte Weise wie folgt sendet:
gemäß der Zeitsteuerungssequenz zunächst jeweils das Finden und Senden der entsprechenden Steuerbefehle der Lasersteuerung (62), der Roboterbewegungssteuerung (41) und der Hilfsgerätesteuerung (51) sowie das Empfangen von Rückmeldungsinformationen des sechsten Grades - Gleichzeitiges Vergleichen der Rückmeldungsinformationen des Sechs-Freiheits-Gelenkroboters, des Lasers (61) und des Hilfsgeräts (52) des Sechs-Freiheits-Gelenkroboters, des Lasers (61) und das Hilfsgerät (52) mit Ausführungserwartungen und als Reaktion auf die Rückmeldungsinformationen, die die Erwartungen erfüllen, was anzeigt, dass der Sechs-Freiheits-Gelenkroboter, der Laser (61) und das Hilfsgerät (52) in Betrieb gut synchron sind und weiterhin nachfolgende Steuerbefehle sendet; und als Reaktion darauf, dass die Rückmeldungsinformationen nicht den Erwartungen entsprechen, Aufrufen eines voreingestellten Synchronisationsverarbeitungsmechanismus zur Verarbeitung gemäß den Rückmeldungsbedingungen des Sechs-Freiheits-Gelenkroboters, des Lasers (61) und des Hilfsgeräts ( 52) und dann die Ausführung nachfolgender Befehle als Reaktion darauf starten, dass die drei Geräte wieder synchron sind.

4. Intelligentes Fertigungssystem auf der Basis des digitalen Zwillings nach Anspruch 1, wobei der Prozessdatencontroller (35) so konfiguriert ist, dass er die Ergebnisse der Prozessparameterregelung auf eine bestimmte Weise wie folgt an den Verarbeitungsschema-Generator (22) überträgt:
der Verarbeitungsschema-Generator (22) durchläuft zunächst das Fertigungsterminal-Entitätsszenen-Zwillingsmodell (31) und die bionische Prozessparameter-Datenbank (21) gemäß den vom Benutzer eingestellten bionischen Informationsparametern, empfängt anfängliche Verarbeitungsparameter, der Echtzeit-Prozessdatenerfassungsmodul (32) Prozessdaten erfasst wie die Wahrnehmungsdaten der Szene des Verarbeitungsterminals, In-situ-Schmelzbadtemperatur und Spritzprozessdaten mittels eines Sensors und eines visuellen Erfassungsgeräts während der bionischen Verarbeitung realisiert, wobei der Prozessdatencontroller (35) relevanter Prozessinformationen vom Echtzeit-Prozessdatenerfassungsmodul (32) empfängt und dem Prozess-Offline-Simulationsmodul (34) zur umfassenden Analyse, Beurteilung der Genauigkeit der bionischen Informationsparameter und Durchführung einer Echtzeitanpassung der Prozessparameter, und Durchführen einer Echtzeit-Dateninteraktion mit dem Szenenzwillingsmodell (31) der Fertigungsterminalentität; der Offline-Erfassungsmodul für bionische Informationsparameter (33) die Prozessinformationen in der bionischen Prozessparameter-Datenbank (21) über den Prozessdatencontroller (35) aktualisiert, indem es eine Offline-Erfassung und -Eingabe an bionischen Verarbeitungselementen durchführt; wobei das Prozess-Offline-Simulationsmodul (34) die Informationen vom Echtzeit-Prozessdatenerfassungsmodul (32) und dem Offline-Erfassungsmodul für bionische Informationsparameter (33) empfängt, um eine Offline-Simulation des bionischen Herstellungsprozesses durchzuführen und der Szene des Fertigungsterminal-Entitätsszenen-Zwillingsmodells (31), das die Studie mittels Dateninteraktion mit dem Prozess-Offline-Simulationsmodul (34) fortsetzt und das Modell anpasst.

5. Intelligentes Fertigungssystem auf der Basis des digitalen Zwillings nach Anspruch 1, wobei der Sechs-Freiheits-Gelenkroboter mit einer Erkennungs- und Rückmeldungsvorrichtung ausgestattet ist, wobei die Erkennungs- und Rückmeldungsvorrichtung eine Positionserkennungs- und Rückmeldungsvorrichtung und eine Kollisionserkennungs- und Rückmeldungsvorrichtung umfasst.

6. Intelligentes Fertigungssystem auf der Basis des digitalen Zwillings nach Anspruch 1, wobei das Hilfsgerät (52) eine Klemme, eine Erfassungs- und Erkennungsvorrichtung, eine Umgebungsgas-Bereitstellungsvorrichtung, eine Verarbeitungsmedium-Bereitstellungsvorrichtung und eine synchrone Pulverzuführungsvorrichtung enthält.

7. Intelligentes Fertigungssystem auf der Basis des digitalen Zwillings nach Anspruch 1, wobei das 3D-Modelleditormodul (11) ein CAD-Modelleditormodul ist und das 3D-Modelleditormodul (11) so konfiguriert ist, dass es CAD-Modellierung, Laden, Anzeigen, Bearbeiten, Ändern, Speichern und Datenexport an den zu bearbeitenden Teilen durchführt.

8. Intelligentes Fertigungssystem auf der Basis des digitalen Zwillings nach Anspruch 1, wobei die Bearbeitungsmethoden der bionischen Einheit Phasenumwandlung, Fusion, Gravur, Plattieren und Legieren umfassen; Die Materialparameter der Werkstückmatrix Materialqualität, Absorptionskoeffizient und Wärmeleitfähigkeit umfassen, und die charakteristischen Parameter des Einheitskörpers die Form, den Abstand, die Tiefe, die Breite und die durchschnittliche Mikrohärte des Einheitskörpers umfassen.

## Revendications

1. Système de fabrication intelligente basé sur un jumeau numérique, composé d'un système d'interaction homme-machine (1), d'un système de contrôle de programmation (2), d'un système virtuel jumeau (3) et d'un système d'exécution de traitement (6), dans lequel
le système d'interaction homme-machine comprend un module d'éditeur de modèle 3D (11) et un module constructeur d'unité de traitement bionique (12) ; un générateur de schéma de traitement (22) configuré pour recevoir des paramètres de pièces à traiter du module d'éditeur de modèle 3D (11) et des paramètres d'information bionique du module constructeur d'unité de traitement bionique (12) ;
les paramètres d'information bionique comprennent la sélection d'une méthode de traitement d'unité bionique, le réglage des paramètres du matériau de la matrice de la pièce, les paramètres caractéristiques du corps de l'unité, et la construction et l'étalonnage de la position et de la zone de traitement ;
le système de contrôle de programmation (2) comprend un ordinateur haute performance, un contrôleur laser (62), un contrôleur de mouvement robotique (41) et un contrôleur de dispositif auxiliaire (51), avec le contrôleur laser (62), le contrôleur de mouvement robotique (41) et le contrôleur de dispositif auxiliaire (51) étant directement connectés à l'ordinateur haute performance via un port série ;
l'ordinateur haute performance étant intégré à une base de données de paramètres de processus bionique (21), le générateur de schéma de traitement (22) et un contrôleur de synchronisation intégré (23), avec la base de données de paramètres de processus bionique (21) et le générateur de schéma de traitement (22) configurés pour fournir une interface de système d'interaction homme-machine ;
la base de données de paramètres de processus bionique (21) configurée pour sortir les paramètres de traitement laser et les paramètres de milieu environnemental au générateur de schéma de traitement (22) ;
le générateur de schéma de traitement (22) configuré pour prendre un modèle de pièce 3D ajouté d'informations d'unité de traitement bionique et les informations de paramètre de processus bionique sorties de la base de données de paramètres de processus bionique (21) comme entrée, et configuré pour adopter un algorithme intelligent pour générer respectivement des séquences de commandes de contrôle pour un laser (61), un robot articulé à six degrés de liberté (42) et un dispositif auxiliaire (52) qui comprend la génération d'une séquence de temps de travail coopératif du robot articulé à six degrés de liberté (42), du laser (61) et du dispositif auxiliaire (52) ; et
les séquences de commandes de contrôle comprennent une séquence de contrôle de temps et une séquence de contrôle de commandes de dispositif, et les séquences de commandes de contrôle contenant des informations de contrôle respectives et des informations de synchronisation mutuelle ;
le contrôleur de synchronisation intégré (23) étant configuré pour envoyer les commandes de contrôle respectivement au contrôleur laser (62), au contrôleur de mouvement robotique (41) et au contrôleur de dispositif auxiliaire (51) achevant ainsi le contrôle coordonné du système d'exécution de traitement, où
l'entrée du contrôleur de synchronisation intégré (23) inclut la séquence de contrôle de temps et la séquence de contrôle de commandes de dispositif générée par le générateur de schéma de traitement (22), et les informations de retour d'exécution de commande du robot articulé à six degrés de liberté (42), du laser (61) et du dispositif auxiliaire (52) sont reçues en même temps ; et la sortie du contrôleur de synchronisation intégré (23) inclut les commandes de contrôle respectivement envoyées au contrôleur laser (62), au contrôleur de mouvement robotique (41) et au contrôleur de dispositif auxiliaire (51) ;
le système virtuel jumeau (3) comprend un modèle jumeau de scène d'entité de terminal de fabrication (31), un module d'acquisition de données de processus en temps réel (32), un module d'acquisition hors ligne de paramètres d'information bionique (33), un module de simulation hors ligne de processus (34) et un contrôleur de données de processus (35) ;
le contrôleur de données de processus (35) configuré pour recevoir des informations de données de processus du modèle jumeau de scène d'entité de terminal de fabrication (31), du module d'acquisition de données de processus en temps réel (32), du module d'acquisition hors ligne de paramètres d'information bionique (33) et du module de simulation hors ligne de processus (34) ; le module de simulation hors ligne de processus (34) configuré pour recevoir des informations du module d'acquisition de données de processus en temps réel (32) et du module d'acquisition hors ligne de paramètres d'information bionique (33), et configuré pour transmettre les résultats de régulation des paramètres de processus du contrôleur de données de processus (35) au générateur de schéma de traitement (22) pour générer des séquences de commandes de contrôle ; et la base de données de paramètres de processus bionique (21) configurée pour recevoir des informations de processus du module d'acquisition hors ligne de paramètres d'information bionique (33) et configurée pour mettre à jour les données de processus dans la base de données de paramètres de processus bionique (21) en temps réel ; et
le système d'exécution de traitement comprend un laser (61), une unité de transmission par couplage à fibre optique (63), une tête de travail de traitement laser (64), le robot articulé à six degrés de liberté (42), et un dispositif auxiliaire (52) ; le laser (61) étant connecté à la tête de travail de traitement laser (64) via l'unité de transmission par couplage à fibre optique (63), et la tête de travail de traitement laser (64) disposée à une extrémité de tête du robot articulé à six degrés de liberté (42) configurée pour réaliser un mouvement multidimensionnel de la tête de travail de traitement laser (64) et du traitement laser.

2. Système de fabrication intelligente basé sur un jumeau numérique de la revendication 1, le système de fabrication intelligente basé sur un jumeau numérique est configuré pour générer des séquences de commandes de contrôle, les séquences de commandes de contrôle étant générées de la manière suivante :
le générateur de schéma de traitement (22) permet d'abord à un utilisateur de déterminer les coordonnées centrales du robot articulé à six degrés de liberté (42), d'un dispositif de fixation de la pièce et de la pièce, de sorte que l'agencement global et le positionnement du schéma de traitement sont achevés, puis le générateur de schéma de traitement (22) parcourt les positions et les zones de traitement bionique dans le modèle de pièce 3D : d'abord en extrayant les paramètres caractéristiques d'un corps unitaire à traiter du modèle de pièce 3D, puis en utilisant les informations de traitement de l'unité de traitement bionique pour trouver les données de paramètre de processus optimisées dans la base de données de paramètres de processus bionique (21) ; ensuite, en combinant les paramètres de traitement laser liés à un chemin avec une courbe de l'unité bionique à traiter pour calculer le chemin de marche, la vitesse, l'attitude et d'autres informations du robot articulé à six degrés de liberté (42) ; enfin, en extrayant respectivement les informations de contrôle pertinentes du robot articulé à six degrés de liberté (42), du laser (61) et du dispositif auxiliaire (52) de manière classifiée, et en convertissant respectivement les informations de contrôle pertinentes, sous forme de mappage de règles, en séquences de codes qui peuvent être reconnues par le contrôleur laser (62), le contrôleur de mouvement robotique (41) et le contrôleur de dispositif auxiliaire (51) ; et en même temps, en générant une séquence de temps de travail coopératif du robot articulé à six degrés de liberté (42), du laser (61) et du dispositif auxiliaire (52), et en établissant une relation de mappage correspondante entre les séquences de codes et la séquence de temps, de sorte que le contrôleur de synchronisation intégré (23) effectue un contrôle uniforme sur ceux-ci pour permettre leur travail coordonné.

3. Système de fabrication intelligente basé sur un jumeau numérique de la revendication 1, dans lequel le contrôleur de synchronisation intégré (23) est configuré pour envoyer les commandes de contrôle respectivement au contrôleur laser (62), au contrôleur de mouvement robotique (41) et au contrôleur de dispositif auxiliaire (51) de la manière spécifique suivante :
selon la séquence de contrôle de temps, d'abord trouver et envoyer respectivement les commandes de contrôle correspondantes du contrôleur laser (62), du contrôleur de mouvement robotique (41) et du contrôleur de dispositif auxiliaire (51), recevoir en même temps les informations de retour du robot articulé à six degrés de liberté (42), du laser (61) et du dispositif auxiliaire (52), comparer les informations de retour du robot articulé à six degrés de liberté (42), du laser (61) et du dispositif auxiliaire (52) avec les attentes d'exécution, et en réponse aux informations de retour répondant aux attentes, indiquer que le robot articulé à six degrés de liberté (42), le laser (61) et le dispositif auxiliaire (52) fonctionnent bien en synchronie, et continuer à envoyer les commandes de contrôle suivantes ; et en réponse aux informations de retour ne répondant pas aux attentes, invoquer un mécanisme de traitement de synchronisation prédéfini pour le traitement selon les conditions de retour du robot articulé à six degrés de liberté (42), du laser (61) et du dispositif auxiliaire (52), puis commencer l'exécution des commandes suivantes en réponse aux trois dispositifs étant à nouveau en synchronie.

4. Système de fabrication intelligente basé sur un jumeau numérique de la revendication 1, dans lequel le contrôleur de données de processus (35) est configuré pour transmettre les résultats de régulation des paramètres de processus au générateur de sch é ma de traitement (22) de la manière spécifique suivante :
le générateur de schéma de traitement (22) parcourt d'abord dans le modèle jumeau de scène d'entité de terminal de fabrication (31) et la base de données de paramètres de processus bionique (21) selon les paramètres d'information bionique définis par l'utilisateur, recevant les paramètres de traitement initiaux, le module d'acquisition de données de processus en temps réel (32) réalisant l'acquisition de données de processus telles que les données de perception de scène de terminal de traitement, la température de la piscine de fusion in situ et les données de processus d'éclaboussure par le biais d'un capteur et d'un dispositif d'acquisition visuelle pendant le traitement bionique, le contrôleur de données de processus (35) recevant les informations de processus pertinentes du module d'acquisition de données de processus en temps réel (32) et du module de simulation hors ligne de processus (34) pour une analyse complète, jugeant l'exactitude des paramètres d'information bionique et effectuant un ajustement en temps réel sur les paramètres de processus, et effectuant une interaction de données en temps réel avec le modèle jumeau de scène d'entité de terminal de fabrication (31) ; le module d'acquisition hors ligne de paramètres d'information bionique (33) met à jour les informations de processus dans la base de données de paramètres de processus bionique (21) via le contrôleur de données de processus (35) en effectuant une acquisition et une entrée hors ligne sur les éléments de traitement bionique ; le module de simulation hors ligne de processus (34) reçoit les informations du module d'acquisition de données de processus en temps réel (32) et du module d'acquisition hors ligne de paramètres d'information bionique (33) pour effectuer une simulation hors ligne du processus de fabrication bionique, et le modèle jumeau de scène d'entité de terminal de fabrication (31) poursuit l'étude par le biais d'une interaction de données avec le module de simulation hors ligne de processus (34), et ajuste le modèle.

5. Système de fabrication intelligente basé sur un jumeau numérique de la revendication 1, dans lequel le robot articulé à six degrés de liberté (42) est pourvu d'un dispositif de détection et de retour d'information, le dispositif de détection et de retour d'information comprenant un dispositif de détection et de retour d'information de position et un dispositif de détection et de retour d'information de collision.

6. Système de fabrication intelligente basé sur un jumeau numérique de la revendication 1, dans lequel le dispositif auxiliaire (52) contient un serre-joint, un dispositif de détection et de capteurs, un dispositif de fourniture de gaz ambiant, un dispositif de fourniture de milieu de traitement et un dispositif d'alimentation en poudre synchrone.

7. Système de fabrication intelligente basé sur un jumeau numérique de la revendication 1, dans lequel le module d'éditeur de modèle 3D (11) est un module d'éditeur de modèle CAO, et le module d'éditeur de modèle 3D (11) est configuré pour effectuer la modélisation CAO, le chargement, l'affichage, la manipulation, la modification, le stockage et l'exportation des données sur les pièces à traiter.

8. Système de fabrication intelligente basé sur un jumeau numérique de la revendication 1, dans lequel les méthodes de traitement de l'unité bionique comprennent la transformation de phase, la fusion, la gravure, le revêtement et l'alliage ; les paramètres du matériau de la matrice de la pièce comprennent la classe de matériau, le coefficient d'absorption et la conductivité thermique ; et les paramètres caractéristiques du corps de l'unité comprennent la forme, l'espacement, la profondeur, la largeur et la microdureté moyenne du corps de l'unité.
